# EUROPEAN PATENT APPLICATION

(11) **EP 4 266 745 A1**
(43) Date of publication of application: **25.10.2023**
(21) Application number: 21905254.5
(22) Date of filing: 14.10.2021
(51) Int. Cl.: H04W 36/00

(54) **TERMINAL CONTROL METHOD, BASE STATION AND STORAGE MEDIUM**

(30) Priority: 18.12.2020 CN 202011507986
(71) Applicant: ZTE Corporation, Shenzhen, Guangdong 518057 (CN)
(72) Inventor: LI, Tengfei, Shenzhen, Guangdong 518057 (CN)
(74) Representative: Boult Wade Tennant LLP
(86) International application number: PCT/CN2021/123752
(87) International publication number: WO 2022/127325

(57) **Abstract**

The present disclosure provides a terminal control method, a base station, and a storage medium. The method comprises: when a first base station receives a service request of a predetermined service sent by a terminal, sending a pre-handover request carrying a predetermined service identifier to the second base station, such that the second base station returns pre-handover success information to the first base station, wherein the second base station stores first base station configuration information; when the first base station receives the pre-handover success information, sending a handover command to the terminal such that the terminal accesses the second base station and sends terminal capability information; and when the first base station does not support the predetermined service and the terminal does not support the predetermined service in a communication system to which the first base station belongs, the second base station controls, when processing the predetermined service for the terminal, the terminal to always access the second base station according to the predetermined service identifier, the first base station configuration information and the terminal capability information.

## Description

### CROSS-REFERENCE TO RELATED APPLICATION

This application claims the priority to Chinese Patent Application No. 202011507986.3 entitled "TERMINAL CONTROL METHOD, BASE STATION AND STORAGE MEDIUM" and filed on December 18, 2020, the full disclosure of which is incorporated herein by reference.

### TECHNICAL FIELD

The present disclosure relates to the field of communication technology, and in particular, to a terminal control method, a base station and a storage medium.

### BACKGROUND

In a 3GPP (3rd Generation Partnership Project) mobile communication system, relatively high priority is provided for intended service such as emergency call service, which are related to the health and property safety of people. However, there is currently a situation where the first base station switches a currently accessing terminal to the second base station in order to make the second base station to handle the intended service for the terminal. However, the terminal may re-access the first base station during the process, resulting in the intended service not being connected or interrupted. For example, a 5G base station switches the currently accessing terminal to a 4G base station so as to make the 4G base station to handle emergency call service for the terminal, however, the terminal may re-access the first base station during the process, resulting in the emergency call service not being connected or interrupted.

### SUMMARY

Based on this, the present disclosure provides a terminal control method, a base station and a storage medium to ensure that a terminal will not re-access to the first base station during the second base station handles intended service for the terminal after the first base station switched the terminal to the second base station.

In a first aspect, the present disclosure provide a terminal control method, applicable to a first base station, comprising.
sending, in response of receiving a service request for an intended service from a terminal, a pre-switchover request carrying identification of the intended service to a second base station, wherein the second base station stores configuration information of the first base station which is configured to indicate whether the first base station supports the intended service;
sending, in response of receiving a pre-switchover success information returned by the second base station, a switchover command to the terminal to enable the terminal to access the second base station and to send terminal capability information to the second base station, wherein the terminal capability information is configured to indicate whether the terminal supports the intended service in a communication system to which the first base station belongs;
wherein the intended service identification, the configuration information of the first base station and the terminal capability information are configured to keep the terminal accessing the second base station during the second base station handles the intended service for the terminal in case that the first base station does not support the intended service and the terminal does not support the intended service in the communication system to which the first base station belongs.

The present disclosure further provide a terminal control method, applicable to a second base station which stores configuration information of a first base station configured to indicate whether the first base station supports an intended service, the method comprising:
returning, in response of receiving a pre-switchover request carrying identification of an intended service from the first base station, pre-switchover success information to the first base station to enable the first base station to send a switchover command to a terminal, wherein the switchover command is configured to enable the terminal to access the second base station and to send terminal capability information, the terminal capability information is configured to indicate whether the terminal supports the intended service in a communication system to which the first base station belongs.
keeping, during handling the intended service, the terminal accessing the second base station according to the identification of the intended service, the terminal capacity information and the configuration information of the first base station in case that the first base station does not support the intended service and the terminal does not support the intended service in the communication system to which the first base station belongs.

In a second aspect, the present disclosure provides a base station comprising a processor and a memory; wherein the memory is configured to store a computer program, and the processor is configured to implement operations of the terminal control method as described in the first aspect in case of executing the computer program.

In a third aspect, the present disclosure provide a computer-readable storage medium, the computer-readable storage medium storing a computer program, wherein the computer program, in case of being executed by a processor, causes the processor to implement operations of the terminal control method as described in the first aspect.

### BRIEF DESCRIPTION OF DRAWINGS

FIG. 1A illustrates a schematic flowchart of a terminal control method according to an embodiment of the present disclosure.
FIG. 2 illustrates a schematic flowchart in an applied scenario of an embodiment of the present disclosure.
FIG. 3 illustrates a schematic flowchart of the terminal control method according to an embodiment of the present disclosure when applied to a first base station.
FIG. 4 illustrates a schematic flowchart of the terminal control method according to an embodiment of the present disclosure when applied to a second base station.
FIG. 5 illustrates a schematic block diagram of a structure of the base station according to an embodiment of the present disclosure.

### DETAILED DESCRIPTION OF EMBODIMENTS

The technical solutions of the embodiments of this disclosure will be clearly and completely described below in connection with the drawings accompanying the specification. Obviously, the embodiments described are part of the embodiments of the present disclosure rather than all of them. Based on the embodiments according to the present disclosure, all other embodiments obtained by one of ordinary skill in the art without creative work fall within the scope of protection of the present disclosure.

The flowcharts illustrated in the accompanying drawings are just illustrative and do not have to comprise all the elements and operations/steps, nor do they have to be performed in the order depicted. For example, some operations/steps may be broken down further, combined or partially merged, so the actual execution order may be changed according to actual situation.

Some embodiments of the present disclosure will be described hereinafter in detail in conjunction with the accompanying drawings. The following embodiments and the features in the embodiments may be combined with each other without conflict.

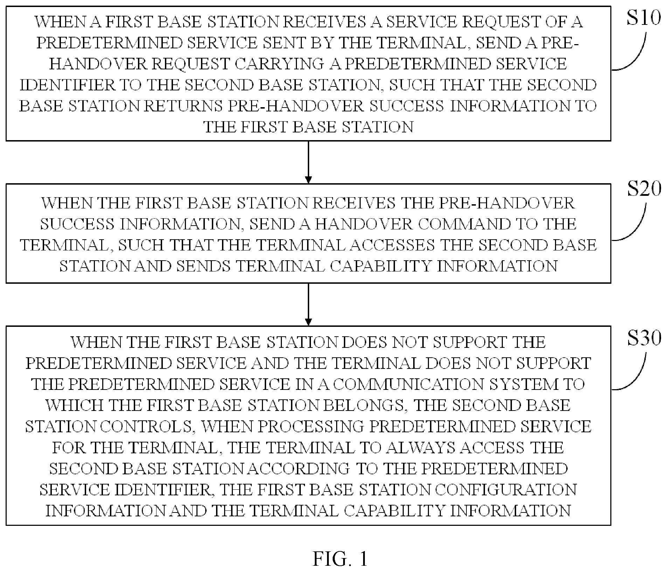

The present disclosure embodiment provides a terminal control method applicable to a base station, as illustrated in FIG. 1, which may comprise, but not limited to, Step S10 to Step S30.

In step S10, the first base station, in response of receiving a service request for an intended service from a terminal, sends a pre-switchover request carrying identification of the intended service to a second base station to enable the second base station to return pre-switchover success information to the first base station.

Step S20, the first base station, in response of receiving the pre-switchover success information, sends a switchover command to the terminal to enable the terminal to access the second base station and to send terminal capability information.

When a user initiates an intended service (e.g. an emergency call service) via the terminal, the terminal sends a service request for an intended service to the first base station, and since the terminal has a higher priority for accessing the first base station than for accessing the second base station, it can be understood that at this time the terminal is accessing to the first base station, and particularly to a cell of the first base station (for the sake of convenience, it is referred to as a service cell in the embodiment of the present disclosure). When the first base station receives the service request, in case that the first base station cannot handle the intended service for the terminal or the terminal does not support the intended service in a communication system to which the first base station belongs (for example, the first base station is a 5G base station and the terminal does not support emergency call service in 5G), the terminal is required to be switched to the second base station, which will handle the intended service for the terminal. It should be noted that the first base station cannot handle the intended services for the terminal mainly for the following reasons, but not limited to: the first base station does not have relevant configuration for the intended service, for example, it does not have relevant configuration for the emergency call service.

Based on this, in order to notify the second base station of that the terminal to be switched over requests to handle the intended service, the first base station may send a pre-switch request carrying the identification of the intended service to the second base station, so that the second base station learns that the terminal to be switched over requests to handle the intended service based on the identification of the intended service, and the second base station can therefore perform access preparation for the terminal based on the intended service. For example, the pre-switchover preparation can be performed for the terminal according to relevant provisions of the communication protocol for the intended service. In this way, the second base station returns pre-switchover success information to the first base station after performing preparation for the terminal, so that the first base station learns that it is possible to switch the terminal to the second base station. Then the first base station can send a switchover command to the terminal to enable the terminal to access the second base station and to send terminal capability information to the second base station, wherein the terminal capability information is configured to indicate whether the terminal supports the intended services in the communication system to which the first base station belongs, for example, whether the terminal supports emergence call service in 5G. Thus, the second base station learns from the terminal capacity information whether the terminal supports the intended service in the communication system to which the first base station belongs after the terminal accesses the second base station. In some embodiments of the present disclosure, the terminal may be access a cell of the second base station, which may be a cell designated by the terminal, and for the sake of convenience, it is referred to as a target cell in the present disclosure for convenience of description. In addition, the configuration information of the first base station is stored in the second base station in advance, and the configuration information of the first base station is configured to indicate whether the first base station supports the intended services, for example to indicate whether the first base station supports the emergency call service. In other words the second base station can learn from the configuration information of the first base station whether the first base station supports the intended services.

In some embodiments of the present disclosure, step S10 may comprise, but is not limited to, Step S101 to Step S102.

In Step S101, in response of receiving a service request for an intended service from the terminal, the first base station sends a pre-switchover request carrying identification of the intended service to the second base station according to transfer indication in the service request.

Step S102, the second base station allocates reserved resources for the terminal's switchover with a high priority according to the identification of the intended service and returns pre-switchover success information to the first base station.

The service request sent by the terminal to the first base station may comprise a transfer indication, enabling the first base station to send a pre-switchover request carrying identification of the intended service to the second base station in accordance with the transfer indication. In addition, as can be seen from the foregoing, the identification of the intended service enables the second base station to learn that the terminal to be switched over requests to handle the intended service, so that the second base station can allocates reserved resources for the terminal's switchover with a high priority according to the identification of the intended service, for example allocating carrying resources etc., with a high priority, i.e. preparing for the switchover of the terminal with a high priority, thus effectively reducing call delay for the terminal to carry out the intended service. For example, the call delay of the terminal for emergency call service is effectively shortened, which simply means that time length before the terminal makes an emergency call (e.g. 119) is shortened.

In some embodiments of the present disclosure, as can be seen from the foregoing, the switchover command may enable the terminal to access a target cell of the second base station, and when the terminal fails to access second base station, the terminal may re-access the first base station, such as re-accessing any cell of the first base station, which may extend call delay for the terminal to carry out emergency call service. Based on this, in order to enable the terminal to re-access the second base station when the terminal fails to access the second base station, it is possible to make the switchover command in step S20 carry the identification of the intended service, so that the terminal can re-access the second base station according to indication of the identification of the intended service when the terminal fails to access the second base station, such as re-accessing any cell of the second base station. Furthermore, since the second base station may lose the identification of the intended service when the terminal fails to access the second base station, the identification of the intended service carried by the switchover command may further instruct the terminal to carry the identification of the intended service in access information to ensure that the second base station can keep the terminal accessing the second base station during subsequently handling the intended service for the terminal. It should be understood that it ensures that the terminal does not re-access the first base station and effectively reduces the call delay for the terminal to carry out emergency call service.

In some embodiments of the present disclosure, the first base station stores terminal status information, which is configured to indicate current service status of the terminal. Based on this, after sending the switchover command to the terminal, the method further comprises, but is not limited to, Step S201.

In Step S201, when the terminal fails to access the second base station and re-accesses the first base station, the first base station controls the terminal to re-access the second base station based on the terminal status information and instructs the terminal to carry the identification of the intended service in access information.

As can be seen from the foregoing, the switchover command enables the terminal to access the target cell of the second base station, and when the terminal fails to access the second base station, the terminal may re-access the first base station, such as re-accessing any cell of the first base station, so that the first base station is required to re-send a pre-switchover request to the second base station, etc., thereby extending the call delay for the terminal to carry out emergency call service. Based on this, terminal status information may be stored in the first base station in real time, so that when the terminal initiates a service request for an intended service, the terminal status information can be configured to indicate the terminal is to carry out the intended service, so that when the terminal fails to access the second base station and re-accesses the first base station, the first base station can control the terminal to re-access the second base station based on the terminal status information. In some implementations of the present disclosure, the first base station may control the terminal to re-access the second base station in a redirection mode, wherein the redirection mode is already known to one of ordinary skill in the art and will not be elaborated herein. In addition, since the second base station may lose the identification of the intended service when the terminal fails to access the second base station, the first base station may further instruct, based on the terminal status information, the terminal to carry the identification of intended service in the access information to ensure that the second base station can keep the terminal accessing the second base station during subsequently handling the intended service for the terminal. It should be understood that this reduces the call delay for the terminal to carry out emergency call service.

In Step S30, in case that the first base station does not support the intended service and the terminal does not support the intended service in a communication system to which the first base station belongs, the second base station, during handling the intended service for the terminal, keep the terminal accessing the second base station based on the identification of the intended service, the configuration information of the first base station and the terminal capability information.

When the terminal accesses the second base station successfully, the second base station can handle the intended service for the terminal. However, in some cases, the terminal may re-access to the first base station during the second base station handles the intended service for the terminal. On one hand, the terminal may re-access to the first base station before the intended service is connected, which may lead to interruption of the intended service, for example, the terminal re-access the first base station before the emergency call service is connected, which causes interruption of the emergency call service. On the other hand, during establishing the intended service after the intended service is connected, the terminal may re-access the first base station, which leads to interruption of the intended service. For example, during the establishing an emergency call service after the emergency call service is connected (i.e., during the call), the terminal re-access the first base station, which causes interruption of the emergency call service. Based on this, after the terminal has accessed to the second base station successfully, if the second base station learns from the configuration information of the first base station that the first base station does not support the intended service and learns from the terminal capacity information that the terminal does not support the intended service in the communication system to which the first base station belongs, the second base station may keep, during handling the intended service for the terminal, the terminal accessing the second base station according to the identification of the intended service, the configuration information of the first base station and the terminal capability information, that is, the terminal will not re-access the first base station, so as to ensure that the terminal can carry out the intended services properly, which solves the problems existing in some cases.

In some embodiments of the present disclosure, step S30 may comprise, but is not limited to, Step S301.

Step S301, the second base station keeps the terminal accessing the second base station according to the identification of the intended service before connecting the terminal to the intended service, and keeps the terminal accessing the second base station according to the configuration information of the first base station and the terminal capacity information during establishing the intended service for the terminal.

As can be seen from the foregoing, the second base station can learn from the identification of the intended service that the terminal to be switched over is to handle the intended service, so the second base station can keep the terminal accessing the second base station according to the first service identification before connecting the terminal to the intended service, so as to ensure that the intended service can be connected for the terminal. For example, the second base station keeps the terminal accessing the second base station according to the first service identification before connecting the terminal to the emergency call service, so as to ensure that the terminal can be connected to the emergency call service (e.g. 119). In addition, the second base station may learn from the configuration information of the first base station that the first base station does not support the intended service and may learn from the terminal capacity information that the terminal does not support the intended service in the communication system to which the first base station belongs. In such a case, the second base station may keep the terminal accessing the second base station according to the configuration information of the first base station and the terminal capacity information during establishing the intended service for the terminal, so that the intended service carried out by the terminal will not be interrupted. For example, during establishing an emergency call service for the terminal, the second base station keeps the terminal accessing the second base station according to the configuration information of the first base station and the terminal capacity information, such that the emergency call service carried out by the terminal will not be interrupted, which can be simply taken as that an emergency call will not be interrupted after the terminal is connected to the emergency call service. Thus, the second base station can keep the terminal accessing the second base station according to the identification of the intended service, the configuration information of the first base station and the terminal capacity information. In other words, the terminal will not re-access the first base station, thereby guaranteeing that the terminal is capable of carrying out the intended service properly.

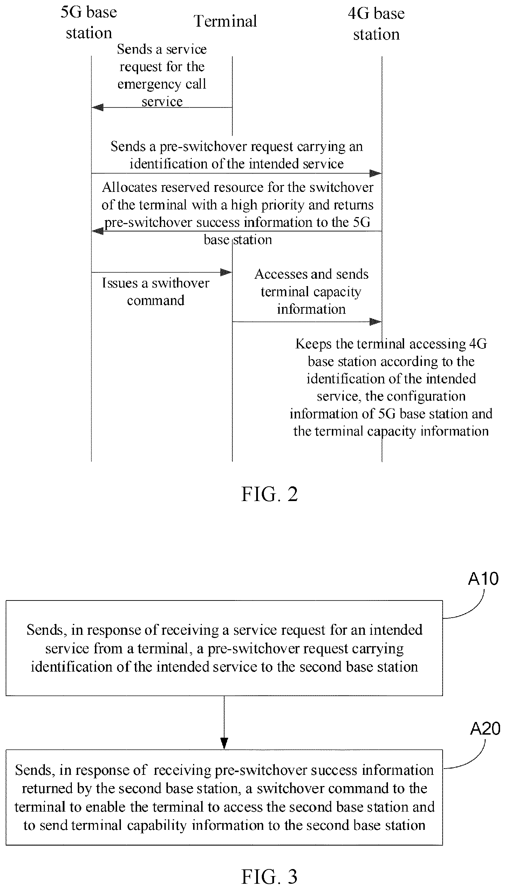

Based on the above description, the present disclosure can be applied in the following scenario, in which the terminal is a 5G terminal, the first base station comprises a 5G base station, the second base station comprises a 4G base station, and the intended service comprises an emergency call service, wherein the terminal is currently accessing a 5G base station and there is configuration information of the 5G base station stored in the 4G base station, and it can be understood that the 4G base station can learn from the configuration information of the 5G base station that the 5G base station does not support the emergency call service. In addition, the terminal does not support emergency call service in 5G, and it can be understood that the 5G terminal has a higher priority for accessing the 5G base station than for accessing the 4G base station. Based on this, as illustrated in FIG. 2, when a user initiates an emergency call service via the terminal, the terminal sends a service request for the emergency call service to the 5G base station; in response of the service request, the 5G base station sends a pre-switchover request carrying an identification of the intended service to the 4G base station; the 4G base station allocates reserved resources for the terminal's switchover with a high priority according to the identification of the intended service and returns pre-switchover success information to the 5G base station; the 5G base station issues a switchover command to the terminal to enable the terminal to access the 4G base station and to send terminal capability information to the 4G base station. It can be understood that the 4G base station can learn from the terminal capacity information that the terminal does not support emergency call service in 5G. The 4G base station keeps the terminal accessing the 4G base station according to the identification of the intended service before connecting the terminal to the emergency call service, and, keeps the terminal accessing the 4G base station according to the configuration information of the 5G base station and the terminal capacity information during establishing the emergency call service for the terminal. It can be understood that, during handling the emergency call service for the terminal, the 4G base station can keep the terminal accessing the 4G base station according to the identification of the intended service, the configuration information of the 5G base station and the terminal capability information. In other words, the terminal will not re-access the 5G base station so as to ensure that the terminal can carry out the emergency call service properly. It should be noted that the terminal can re-access to the 5G base station after the emergency call service completes.

In summary, the terminal control method according to the present disclosure, when applied to a first base station, as illustrated in FIG. 3, may comprise, but is not limited to, steps A10 to A20.

In step A10, the first base station sends, in response of receiving a service request for an intended service from a terminal, a pre-switchover request carrying identification of the intended service to the second base station, wherein the second base station stores configuration information of the first base station which is configured to indicate whether the first base station supports the intended service.

Step A20, the first base station sends, in response of receiving pre-switchover success information returned by the second base station, a switchover command to the terminal to enable the terminal to access the second base station and to send terminal capability information to the second base station, wherein the terminal capability information is configured to indicate whether the terminal supports the intended services in a communication system to which the first base station belongs.

Wherein, in case that the first base station does not support the intended service and the terminal does not support the intended service in the communication system to which the first base station belongs, the identification of the intended service, the configuration information of the first base station and the terminal capability information are configured to keep the terminal accessing the second base station during the second base station handles the intended service for the terminal.

In some embodiments of the present disclosure, step A10 may comprise, but is not limited to, the following: sending, in response of receiving a service request for an intended service from the terminal, a pre-switchover request carrying identification of the intended service to the second base station according to transfer indication in the service request to enable the second base station to allocate reserved resources for switchover of the terminal with a high priority according to the identification of the intended service.

In some embodiments of the present disclosure, the switchover command carries the identification of the intended service, which is configured to instruct the terminal to re-access the second base station and to carry the identification of the intended service in access information if the terminal fails to access the second base station.

In some embodiments of the present disclosure, the first base station stores terminal status information which is configured to indicate current service status of the terminal. Based on this, after sending the switchover command to the terminal, the method may further comprise, but is not limited to, the following: in case that the terminal fails to access the second base station and re-accesses the first base station, controlling the terminal to re-access the second base station and instructing the terminal to carry the identification of the intended service in access information according to the terminal status information.

In some embodiments of the present disclosure, the identification of the intended service is configured to keep the terminal accessing the second base station before the second base station connects the terminal to the intended service, and the configuration information of the first base station and the terminal capability information are configured to keep the terminal accessing the second base station during the second base station establishes the intended service for the terminal.

In some embodiments of the present disclosure, the terminal has a higher priority for accessing the first base station than for accessing the second base station, and the intended service comprise emergency call service.

The above can be found in the forgoing for specific implementation and will not be elaborated here for the sake of brevity of the specification.

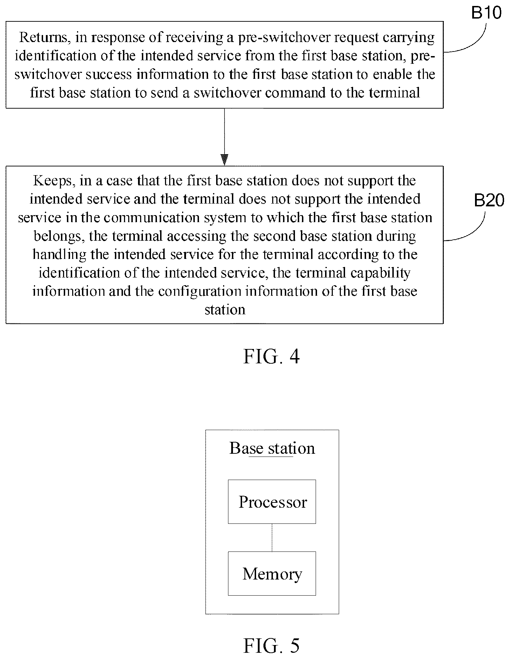

Further, the terminal control method according to this disclosure, when applied to a second base station, as illustrated in FIG. 4, may comprise, but is not limited to, Step B10 to Step B20, wherein the second base station stores configuration information of a first base station which is configured to indicate whether the first base station supports an intended service.

In step B 10, the second base station returns, in response of receiving a pre-switchover request carrying identification of the intended service from the first base station, pre-switchover success information to the first base station to enable the first base station to send a switchover command to the terminal, wherein the switchover command is configured to enable the terminal to access the second base station and to send terminal capability information to the second base station, and the terminal capability information is configured to indicate whether the terminal supports the intended service in a communication system to which the first base station belongs.

Step B20, the second base station keeps, in case that the first base station does not support the intended service and the terminal does not support the intended service in the communication system to which the first base station belongs, the terminal accessing the second base station during handling the intended service for the terminal according to the identification of the intended service, the terminal capability information and the configuration information of the first base station.

In some embodiments of the present disclosure, step B10 may comprise, but is not limited to, the following: allocating, in response of receiving a pre-switchover request carrying identification of the intended service from the first base station, reserved resources for the terminal's switchover with a high priority according to the identification of the intended service, and returning pre-switchover success information to the first base station.

In some embodiments of the present disclosure, the switchover command carries identification of the intended service, which is configured to instruct the terminal to re-access the second base station and carry the identification of intended service in access information in case that the terminal fails to access the second base station.

In some embodiments of the present disclosure, the first base station stores terminal status information which is configured to indicate the current service status of the terminal; the terminal status information is further configured to enable the first base station to control, in case that the terminal fails to access the second base station and reconnects to the first base station based on the terminal status information, the terminal to reconnect to the second base station and instruct the terminal to carry the identification of the intended service in access information.

In some embodiments of the present disclosure, step B20 may comprise, but is not limited to, keeping the terminal accessing the second base station according to the identification of the intended service before connecting the terminal to the intended service, and, keeping the terminal accessing the second base station according to configuration information of the first base station and terminal capability information during establishing the intended service for the terminal.

In some embodiments of the present disclosure, the terminal has a higher priority for accessing the first base station than for accessing the second base station, and the intended service comprise emergency call service.

The above can be found in the forgoing for specific implementation and will not be elaborated here for the sake of brevity of the specification.

Embodiments of the present disclosure further provide a base station, as illustrated in FIG. 5, comprising a processor and a memory, the memory configured to store a computer program; the processor configured to execute the computer program and to implement operations of any one of the terminal control methods according to embodiments of the present disclosure when executing the computer program.

It should be understood that the processor may be a Central Processing Unit (CPU), which may instead be other general purpose processors, Digital Signal Processors (DSP), Application Specific Integrated Circuit (ASIC), Field-Programmable Gate Array (FPGA) or other programmable logic device, discrete gate or transistor logic device, discrete hardware component, etc. The general purpose processor may be a microprocessor or the processor may be any conventional processor, etc.

Embodiments of the present disclosure further provides a computer readable storage medium which stores a computer program which, when executed by a processor, causes the processor to implement operations of any one of the terminal control methods according to embodiments of the present disclosure.

The present disclosure provides a terminal control method, a base station and a storage medium. The terminal control method comprises: a first base station sending, in response of receiving a service request for an intended service from a terminal, a pre-switchover request carrying identification of the intended service to a second base station, to make the second base station return a pre-switchover success information to the first base station, wherein the second base station stores configuration information of the first base station; the first base station sending, in response of receiving the pre-switchover success information, a switchover command to the terminal, so as to enable the terminal to access the second base station and to send terminal capacity information to the second base station; the second base station keeping the terminal accessing the second base station according to the identification of the intended service, the configuration information of the first base station, and the terminal capacity information during handling the intended service for the terminal in case that the first base station does not support the intended service and the terminal does not support the intended service in a communication system to which the first base station belongs. Thereby, through the terminal control method according to embodiments of the present disclosure, the terminal can be kept accessing the second base station, guaranteeing that the terminal is capable of carrying out the intended service properly.

It will be understood by one of ordinary skill in the art that all or some operations of the terminal control methods, the functional modules/units of systems, devices disclosed above may be implemented as software, firmware, hardware and suitable combinations thereof. In the hardware implementation, the division between functional modules/units mentioned in the above description does not necessarily correspond to a division of physical components; for example, a physical component may have multiple functions, or a function or step may be performed cooperatively by several physical components. Some or all of the physical components may be implemented as software executed by a processor, such as a central processing unit, a digital signal processor or a microprocessor, or as hardware, or as an integrated circuit, such as a dedicated integrated circuit. Such software may be distributed on a computer-readable storage medium, which may comprise a computer-readable storage medium (or non-transitory medium) and a communication medium (or transitory medium).

As is well known to one of ordinary skill in the art, the term computer readable storage medium comprises volatile and non-volatile, removable and non-removable media implemented in any method or technology for storing information, such as computer readable instructions, data structures, program modules, or other data. Computer-readable storage media comprise, but not limited to, RAM, ROM, EEPROM, flash memory or other memory technology, CD-ROM, digital versatile disk (DVD) or other optical disk storage, magnetic cartridges, magnetic tapes, disk storage or other magnetic storage devices, or any other media that can be configured to store desired information and can be accessed by a computer. In addition, it is well known to one of ordinary skill in the art that communication media typically contain computer readable instructions, data structures, program modules or other data in modulated data signals such as carrier waves or other transmission mechanisms, and may comprise any information transmission medium.

In an exemplary embodiment of the present disclosure, the computer-readable storage medium may be an internal storage unit of the base station described in the preceding embodiment, such as a hard disk or memory of the base station. The computer-readable storage medium may instead be an external storage device of the base station, such as a plug-in hard disk, a Smart Media Card (SMC), a Secure Digital (SD) card, a Flash Card, etc. provided with the base station.

The foregoing are only specific implementation of the present disclosure, but the scope of protection of the present disclosure is not limited thereto, and one of ordinary skill in the art can easily conceive of various equivalent modifications or substitutions within the technical scope disclosed in the present disclosure, which shall be covered by the scope of protection of the present disclosure. Therefore, the scope of protection of this disclosure is defined by the scope of protection of the claims.

## Claims

1. A terminal control method, applicable to a first base station, comprising:
sending, in response of receiving a service request for an intended service from a terminal, a pre-switchover request carrying identification of the intended service to a second base station, wherein the second base station stores configuration information of the first base station, and the configuration information of the first base station is configured to indicate whether the first base station supports the intended service; and
sending, in response of receiving a pre-switchover success information returned by the second base station, a switchover command to the terminal to enable the terminal to access the second base station and to send terminal capability information, wherein the terminal capability information is configured to indicate whether the terminal supports the intended services in a communication system to which the first base station belongs;
wherein the identification of the intended service, the configuration information of the first base station, and the terminal capacity information are configured to keep the terminal accessing the second base station during the second base station handles the intended service for the terminal in case that the first base station does not support the intended service and the terminal does not support the intended service in the communication system to which the first base station belongs.

2. The method according to claim 1, wherein sending, in response of receiving the service request for the intended service from the terminal, the pre-switchover request carrying the identification of the intended service to the second base station, comprising:
sending, in response of receiving the service request for the intended service from the terminal, a pre-switchover request carrying identification of the intended service to the second base station according to transfer indication in the service request, so as to enable the second base station allocate reserved resources for switchover of the terminal with a high priority according to the identification of the intended service.

3. The method according to claim 1, wherein the switchover command carries the identification of the intended service, which is configured to instruct the terminal to re-access the second base station and carry the identification of the intended service in access information in case that the terminal fails to access the second base station.

4. The method according to claim 1, wherein the first base station stores terminal status information which is configured to indicate current service status of the terminal;
after sending the switchover command to the terminal, comprising:
controlling the terminal to re-access the second base station and instructing the terminal to carry the identification of the intended service in access information according to the terminal status information in case that the terminal fails to access the second base station and re-accesses the first base station.

5. The method according to any one of claims 1 to 4, wherein the identification of the intended service is configured to keep the terminal accessing the second base station before the second base station connects the terminal to the intended service, and the configuration information of the first base station and the terminal capability information are configured to keep the terminal accessing the second base station during the second base station establishes the intended service for the terminal.

6. The method according to any one of claims 1 to 4, wherein the terminal has a higher priority for accessing the first base station than for accessing the second base station, and the intended service comprises an emergency call service.

7. A terminal control method, applicable to a second base station storing configuration information of a first base station which is configured to indicate whether the first base station supports an intended service, the method comprising:
returning pre-switchover success information to the first base station in response of receiving a pre-switchover request carrying identification of an intended service from the first base station, to enable the first base station to send a switchover command to a terminal, wherein the switchover command is configured to enable the terminal to access the second base station and to send terminal capability information which is configured to indicate whether the terminal supports the intended service or not in a communication system to which the first base station belongs;
keeping, during handling the intended service for the terminal, the terminal accessing the second base station according to the identification of the intended service, the terminal capacity information, and the configuration information of the first base station in case that the first base station does not support the intended service and the terminal does not support the intended service in the communication system to which the first base station belongs.

8. The method according to claim 7, wherein returning the pre-switchover success information to the first base station in response of receiving the pre-switchover request carrying the identification of the intended service from the first base station comprising: allocating reserved resource for switchover of the terminal with a high priority in response of receiving a pre-switchover request carrying identification of an intended service from the first base station, and returning pre-switchover success information to the first base station.

9. The method according to claim 7, wherein the switchover command carries the identification of the intended service which is configured to instruct the terminal to re-access the second base station and carry the identification of the intended service identification in access information in case that the terminal fails to access the second base station.

10. The method according to claim 7, wherein the first base station stores terminal status information which is configured to indicate current service status of the terminal; and
the terminal status information is further configured to enable the first base station to control the terminal to re-access the second base station and to instruct the terminal to carry the identification of the intended service in access information in case that the terminal fails to access the second base station and re-accesses the first base station.

11. The method according to any one of claims 7 to 10, wherein keeping the terminal accessing the second base station during handling the intended service for the terminal according to the identification of the intended service, the terminal capability information and the configuration information of the first base station, comprising:
keeping the terminal accessing the second base station according to the identification of the intended service before connecting the terminal to the intended service, and
keeping the terminal accessing the second base station during establishing the intended services for the terminal according to both the configuration information of the first base station and the terminal capability information.

12. The method according to any one of claims 7 to 10, wherein the terminal has a higher priority for accessing the first base station than for accessing the second base station, and the intended service comprises an emergency call service.

13. A base station, comprising:
a memory configured to store a computer program; and
a processor, configured to execute the computer program, and to implement operations of the terminal control method according to any one of claims 1 to 6, or to implement operations of the terminal control method according to the any one of claims 7 to 12 when executing the computer program.

14. A computer readable storage medium, wherein the computer readable storage medium stores a computer program, the computer program when executed by a processor causes the processor to implement operations of the terminal control method according to any one of claims 1 to 6, or, to implement operations of the terminal control method according to any one of claims 7 to 12.
